Europäisches Patentamt

European Patent Office

Office européen des brevets

(11) Veröffentlichungsnummer: **0 298 378**
**A1**

## EUROPÄISCHE PATENTANMELDUNG

(21) Anmeldenummer: 88110512.6

(22) Anmeldetag: 01.07.88

(51) Int. Cl.4: **C04B 33/13** , **C04B 38/06** , **C04B 33/28**

(30) Priorität: 06.07.87 DE 3722242

(43) Veröffentlichungstag der Anmeldung:
11.01.89 Patentblatt 89/02

(84) Benannte Vertragsstaaten:
FR GB IT NL

(71) Anmelder: **Poegel, Hans Joachim, Dr.**
**Peter-Friedhofenstrasse 21**
**D-5411 Weitersburg(DE)**

(72) Erfinder: **Poegel, Hans Joachim, Dr.**
**Peter-Friedhofenstrasse 21**
**D-5411 Weitersburg(DE)**

(54) Verfahren zur Herstellung von keramischen Erzeugnissen.

(57) Zur Herstellung keramischer Erzeugnisse wird eine keramische Giessmasse, die durch einen Verflüssiger giessfähig gemacht worden ist, mit einer der Gewichtsmenge des Verflüssigers entsprechenden Menge Wasserglas versetzt. Ausserdem wird ein Wasserglashärter zugesetzt. Die Giessmasse wird vergossen oder verformt, getrocknet und gebrannt.

Der Giessmasse können leichtzuschlagstoffe sowie schaumbildende Stoffe zugesetzt werden. Dadurch ist es möglich, integrierte Bauteile herzustellen, d.h. Bauteile, die mehrere Aufgaben übernehmen können. In dem Beispiel ist die Herstellung einer keramischen Platte beschrieben, die bei gleicher chemischer Zusammensetzung unterschiedliche Dichten aufweist. Die äussere glasierte Schicht ist witterungsbeständig, die sich daran anschliessende innere Schicht hat bei geringer Dichte gute wärmeisolierende Eigenschaften

EP 0 298 378 A1

## Verfahren zur Herstellung von keramischen Erzeugnissen

Die vorliegende Erfindung betrifft ein Verfahren zur Herstellung von keramischen Erzeugnissen durch Giessen oder Verformen, Trocknen und Brennen einer keramischen Giessmasse.

Es ist bekannt, dass keramischen Erzeugnisse, die z.B. als Baustoffe für die Herstellung von Wänden verwendet werden, unterschiedliche Aufgaben erfüllen müssen. Seit Jahrhunderten haben keramische Erzeugnisse, insbesondere Ziegelsteine, diese Aufgaben erfüllt und gelten auch heute noch als bevorzugtes Baumaterial. Für die verschiedenen Aufgaben in den Bauwerken werden Erzeugnisse mit unterschiedlichen chemischen Zusammensetzungen verwendet, welche für die speziellen Aufgaben besser geeignet sind. Dabei werden auch in grossem Umfang nichtkeramische Baustoffe verwendet.

Bei Aussenwänden kann die äussere wetterfeste Schicht aus Fliesen oder Klinkern bestehen. Nach innen folgt dann eine Wärmeisolierschicht aus Glasfasern oder organischen Schaumstoffen wie z.B. Styropor. Ziegelszeine bilden dann die tragende Schicht, welche die Bildung eines guten Wohnklimas bewirkt. Für den tragenden Teil der Wände werden fast ausschliesslich Lochziegelsteine verwendet. Diese können auch durch Zusatz von Ausbrennstoffen wie Styropor, Holzgranulat oder Kohle porosiert sein. Als weitere Porosierungsstoffe werden anorganische Leichtzuschlagstoffe wie z.B. Perlit, Blähton oder Cenospheren verwendet.

Es ist bisher nicht gelungen, einheitliche keramische Erzeugnisse herzustellen, die geeignet sind, die verschiedenen Aufgaben zu erfüllen, wie sie z.B. beim Aufbau einer Aussenwand auftreten.

Der Erfindung liegt insbesondere die Aufgabe zugrunde, Bauteile herzustellen,die aus einem einheitlichen keramischen Material bestehen, welches die für den beabsichtigten Verwendungszweck optimalen Eigenschaften aufweist. Es soll also eine integrale Bauweise ermöglicht werden, d.h. ein einheitlich hergestelltes Bauteil soll mehrere Aufgaben erfüllen können. Durch Porosierung kann man Erzeugnisse herstellen welche die gewünschten Eigenschaften wie z.B. Festigkeit, Wärmedämmung oder Wärmekapazität aufweisen. Es ist daher erforderlich, kompaktes wie auch porosiertes keramisches Material unterschiedlicher Dichte in einem Bauteil zu vereinigen.

Diese Aufgabe wird erfindungsgemäss dadurch gelöst, dass man von einer mit speziellen Zusatzstoffen versetzten keramischen Giessmasse ausgeht, die durch einen Verflüssiger giessfähig gemacht worden ist, Wasserglashärter und Wasserglas in der Grössenordnung der Gewichtsmenge des Verflüssigers zusetzt, diese Giessmasse in eine Form bringt, die Masse nach der durch diese zugesetzten Stoffe bedingten Verfestigung trocknet und brennt.

Verflüssiger wird der keramischen Giessmasse in der Regel in einer Menge von etwa 0.5 % zugegeben. Wasserglas selbst ist als guter Verflüssiger bekannt. Die Zugabe eines Wasserglashärters allein zu der keramischen Giessmasse verändert die Konsistenz nur unwesentlich. Es ist daher um so überraschender, dass die zusätzliche Zugabe einer so geringen Menge Wasserglas einen derartig starken Effekt hervorruft.

Die chemischen und technologischen Eigenschaften der gebrannten keramischen Erzeugnisse hängen in erster Linie von der Zusammensetzung der Giessmasse ab. Bei dem vorliegenden Verfahren können die in der Keramik üblichen Giessmassen verwendet werden wie z.B. zur Herstellung von Porzellan, Steinzeug, Steingut, Cordierit, oder feuerfesten Erzeugnissen, welche hohe Gehalte an $Al_2O_3$ oder auch $ZrO_2$ enthalten. Im Gegensatz zu den bisher in der Keramik üblichen Giessmassen erfolgt bei dem vorliegenden Verfahren eine selbsttätige Verfestigung. Man braucht daher auch keine Gipsformen, welche das überschüssige Wasser aufsaugen. Die Giessmasse kann z.B. in eine Gummiform gegossen werden. Man kann auch von sehr feinen plastischen Tonen ausgehen, die bei Verwendung von Gipsformen die Poren verstopfen und dadurch unbrauchbar machen würden.

Zur Herstellung der Giessmassen werden verwendet Ton, Kaolin, Quarzmehl, Feldspat, oder ähnliche Flussmittel, Talkum, basische Rohstoffe, Lithium-haltige Rohstoffe, Schamotte oder auch andere in der Keramik übliche Rohstoffe.

Die Eiganschaften der gebrannte Erzeugnisse können durch Porosierung verändert werden. Für die Porosierung werden die üblichen Porosierungsmittel verwendet wie z.B. geblähte silikatische Stoffe wie Perlit, Cenospheren, Blähton, Bims oder Kieselgur. Ferner können Ausbrennstoffe wie Sägemehl, Kohlenstaub oder Kunststoffhohlkörper, z.B. Styropor in Kugelform zugesetzt werden.

Eine weitere Porosierung kann erfolgen durch Schäumungsmittel, z.B. oberflächenaktive Substanzen, bei denen eine mechanische Aufschäumung durch schnell laufende, lufteinziehende Rühraggregate erfolgt. Ferner können auch Treibmittel zugesetzt werden, z.B. gasabspaltende Verbindungen.

Zu geringe Grünfestigkeit der erhärtenden Giessmasse bei hohen Gehalten an Magerungsmitteln oder zu hohen Gehalten an Porosierungsmitteln kann durch Zugabe von organischen Bindemitteln oder Klebstoffen wie z.B. Methylcellulose, Emulsionen aus Polyvinylacetat oder Acrylsäureestern verbessert werden.

Als Verflüssiger der Giessmasse werden Elektrolyte wie z.B. Soda, Wasserglas oder auch organische Kolloide verwendet. Die Menge hängt von der Zusammensetzung der Giessmasse ab und liegt in der Grössenordnung zwischen 0,1 und 0,8 % , im Durchschnitt bei etwa 0,5 % .Höhere Gehalte an Tonen und geringere Gehalte an Magerungsstoffen erfordern einen höheren Gehalt an Verflüssigern.

Zur Verfestigung dieser Giessmasse nach der Verformung werden Wasserglas und ein Wasserglashärter zugesetzt. Das handelsübliche Wasserglas kann verwendet werden, welches ein $SiO_2$ : $Na_2O$ - Verhältnis im Bereich von 4,0 - 1,8 besitzt. Während zur Verflüssigung der Giessmasse niedrigere $SiO_2$ - Gehalte günstiger sind, erweisen sich für die Verfestigung der Giessmasse höhere $SiO_2$ - Gehalte des Wasserglases als vorteilhaft. Man kann auch Wasserglas in fester Form zugeben. Besonders vorteilhaft ist die Zugabe von festem sprühgestrocknetem Wasserglas, das bei einem Schüttgewicht von etwa 0,06 - 0,12 g / ccm aus kleinen Hohlkugeln besteht. In der Giessmasse lösen sich die kleinen Hohlkugeln auf. Bei gleichzeitiger Zugabe eines Wasserglas härters erfolgt eine chemische Umwandlung zu Silikagel unter Erhalt der durch die Hohlkugeln gebildeten Hohlräume. Unter gewissen Umständen, wenn man z.B. die Verarbeitungszeit verkürzen will, kann die 3 - 5 - fache Menge an Wasserglas zugesetzt werden.

Als Wasserglashärter kommen die üblichen anorganischen Verbindungen wie z.B. Kaliumsilicofluorid, Säurehärter oder auch organische Härter, z.B. Glycerintriacetat oder Äthylglycolacetat, zur Anwendung.

Die Verarbeitung erfolgt durch Giessen in entsprechende Formen. Da die Giessmasse von selbst fest wird, werden keine Gipsformen benötigt. In der Regel können Gummiformen verwendet werden. Die Gummiformen können strukturierte Oberflächen aufweisen, wenn z.B. Reliefs oder Ornamente erwünscht sind. In die Formen können auch beliebig ausgestaltete Formkörper eingelegt werden, z.B.Röhren aus Gummi oder anderen Materialien, wenn gelochte Produkte hergestellt werden sollen. Derartige gelochte Erzeugnisse werden z.B. gebraucht, wenn man eine schon bei den Römern bekannte Hypokaustenheizung anbringen will.

Es ist auch möglich, im Pressverfahren zu arbeiten. Die Verarbeitung erfolgt in diesem Fall nach Verfestigung der Giessmasse. Dieses Verfahren kann auch zur Homogenisierung der Pressmasse angewendet werden, welches im flüssigen Zustand naturgemäss besser bewerkstelligt werden kann als im plastischen Zustand. Das Pressverfahren hat jedoch erhebliche Nachteile, wenn porenbildende Stoffe verwendet werden, welche unter Druck zusammengepresst, beschädigt oder zerstört werden können.

Zur Herstellung leichter Erzeugnisse werden der Giessmasse porenbildende Substanzen zugefügt. Die Menge und Art dieser porenbildenden Substanzen hängt von dem gewünschten Endprodukt ab. Auf diese Weise ist es möglich, leichte Erzeugnisse mit Raumgewichten von etwa 0,35 g / ccm herzustellen. Bei höheren Raumgewichten über etwa 1 g / ccm können bei feinporigen Erzeugnissen diese ohne Schwierigkeiten glasiert werden. Hierfür eignen sich als porenbildende Stoffe z.B. feinporiges Perlit, Cenospheren, feinporiger Schaum oder Ausbrennstoffe. Geringere Raumgewichte unter 1 g / ccm kann man durch Zugabe grobporiger Ausbrennstoffe wie z.B. Styropor-Kugeln erreichen. Um Erzeugnisse gleicher chemischer Zusammensetzung, aber unterschiedlicher Dichte zu erhalten, kann man zu einer Fraktion der Giessmasse zusätzliche Ausbrennstoffe, z.B. Styropor in Kugelform, zugeben. Die Fraktionen unterschiedlicher Dichte werden dann übereinander in eine Form gegossen. Dort erhärten die Giessmassen verschiedener Dichte. Nach der Trocknung wird die Masse in der üblichen Weise gebrannt.

Das vorliegende Verfahren ermöglicht die Herstellung grossformatiger Bauteile mit dicken Wandstärken. Diese Bauteile können in Tunnelöfen mit kurzen Durchlaufzeiten im Schnellbrand gebrannt werden.

Weitere Anwendungsgebiete der auf diese Weise hergestellten Erzeugnisse sind z.B. die technische und die kunstgewerbliche Keramik. Cordierit-Erzeugnisse mit geringen Ausdehnungskoeffizienten sowie Erzeugnisse mit hohen $Al_2O_3$ - oder $ZrO_2$ - gehalten können in der Feuerfest-Industrie eingesetzt werden. Nach diesem Verfahren können Füllkörper für Reaktoren z.B. in Form von Kugeln oder Ringen hergestellt werden oder auch Katalysatorträger für die verschiedensten Anwendungsgebiete. Für kunstgewrbliche Zwecke können z.B. Platten mit strukturierter Oberfläche, Reliefs und Kunstglasuren hergestellt werden. Die Platten können ferner unter Verwendung der Westerwälder Tone mit Salzglasuren versehen werden.

Im folgenden ist ein Ausführungsbeispiel der vorliegenden Erfindung beschrieben.

Beispiel.

Eine Giessmasse folgender Zusammensetzung wurde hergestellt:
30 % halbefetter Ton
12,5 % fetter Ton
17,5 % Feldspat

17.5 % Schamotte

22,5 % Wasser

Diese Giessmasse wurde mit einem Verflüssiger, der Elektrolyte auf Natriumsilikatbasis enthält, von 0,3 % verflüssigt. Ein Liter Perlit unter 1 mm Durchmesser wurden je Kilogramm Giessmasse zugegeben. Ein drittel des Ansatzes wurde mit 0,1 % Wasserglashärter Glycerintriacetat und anschliessend 0,4 % gesprühtem Wasserglas versetzt, und damit eine 1,5 cm dicke Schicht in eine Gummiform gegossen. Zu dem Rest des Ansatzes wurde zunächst unter starkem Rühren ein oberflächenaktiver Schaumbildner zugegeben. Dann wurde pro Kilogramm Giessmasse 0,75 Liter Styropor in Kugelform von etwa 3 mm Durchmesser zugegeben. Zu diesem Teil des Ansatzes wurden ebenfalls 0,1 % Glycerintriacetat und 0,4 % gesprühtes Wasserglas zugegeben und anschliessend auf die in der Gummiform befindliche Schicht in einer Dicke von 6 cm gegossen. Nach 30 Minuten wurde die Giessmasse fest. Nach der Trocknung wurde die Oberfläche glasiert. Die glasierte Platte wurde dann in einem Schnellbrandofen bei 1200° und einer Durchlaufzeit von 2 Stunden gebrannt. Die Dichte der Oberflächenschicht der gebrannten Platte betrug 1,2 g / ccm, die der darunterliegenden Isolierschicht 0,6 g / ccm. Die Druckfestigkeit der Oberflächenschicht betrug 250 kg / cm², die der Isolierschicht 85 kg / cm².

## Ansprüche

1. Verfahren zur Herstellung von keramischen Erzeugnissen durch Giessen oder Verformen, Trocknen und Brennen einer keramischen Masse, dadurch gekennzeichnet, dass der durch Verflüssiger giessfähig gemachten Masse Wasserglas in einer dem Gewicht des Verflüssigers entsprechenden Menge sowie ein Wasserglashärter zugesetzt werden.

2. Verfahren nach Anspruch 1, dadurch gekennzeichnet, dass Wasserglas in fester Form zugegeben wird.

3. Verfahren nach Anspruch 1 und 2, dadurch gekennzeichnet, dass der Masse vor dem Giessen oder Verformen Leichtzuschlagstoffe zugegeben werden.

4. Verfahren nach Anspruch 1 bis 3, dadurch gekennzeichnet, dass der Masse vor dem Giessen oder Verformen Ausbrennstoffe zugegeben werden.

5. Verfahren nach Anspruch 1 bis 4, dadurch gekennzeichnet, dass als Ausbrennstoff Styropor in Kugelform zugesetzt wird.

6. Verfahren nach Anspruch 1 bis 5, dadurch gekennzeichnet, dass der Masse vor dem Giessen oder Verformen Schaum oder schaumbildende Stoffe zugesetzt werden.

# EUROPÄISCHER RECHERCHENBERICHT

Europäisches
Patentamt

## EINSCHLÄGIGE DOKUMENTE

EP 88110512.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH - A5 - 577 437 (POEGEL) <br> * Gesamt * <br><br> -- | 1-6 | C 04 B 33/13 <br> C 04 B 38/06 <br> C 04 B 33/28 |
| X | DE - A - 2 150 735 (POEGEL) <br> * Gesamt * <br><br> -- | 1-6 | |
| X | DE - A - 2 161 242 (POEGEL) <br> * Ansprüche; Seite 4, Zeilen 1,2 * <br><br> -- | 1-6 | |
| X | DE - B1 - 3 001 151 (POEGEL) <br> * Gesamt * <br><br> ---- | 1-6 | |

### RECHERCHIERTE SACHGEBIETE (Int. Cl.4)

C 04 B

Der vorliegende Recherchenbericht wurde für alle Patentansprüche erstellt.

| Recherchenort | Abschlußdatum der Recherche | Prüfer |
|---|---|---|
| WIEN | 26-09-1988 | BECK |